# EUROPEAN PATENT APPLICATION

(11) **EP 1 623 845 A1**
(43) Date of publication of application: **08.02.2006**
(21) Application number: 04018382.4
(22) Date of filing: 03.08.2004
(51) Int. Cl.: B60B 17/00

(54) **Bearing structure**

(71) Applicant: Chuang, William, Shulin City, Taipei Hsien (TW)
(72) Inventor: Chuang, William, Shulin City, Taipei Hsien (TW)
(74) Representative: Casalonga, Axel

(57) **Abstract**

A bearing includes a rotation element (1), a plastic ring (3) securely mounted on the rotation element (1) and having a U-shaped groove (31) defined in an outer periphery of the plastic ring (3) and a metal ring (4) securely mounted on the outer periphery of the plastic ring (3) and having a second U-shaped groove (41) aligned with the U-shaped groove (31) of the plastic ring (3). Load capability of the bearing is high due to the addition of the metal ring on the plastic ring and manufacture cost is low because work involved in mounting the plastic ring on the outer portion is elementary.

## Description

### 1. Field of the Invention

The present invention relates to a bearing, and more particularly to a bearing having a metal ring formed on a U-shaped groove defined in a plastic ring which encloses therein a rotation member so that a light weight yet high load capability bearing structure is formed.

### 2. Description of Related Art

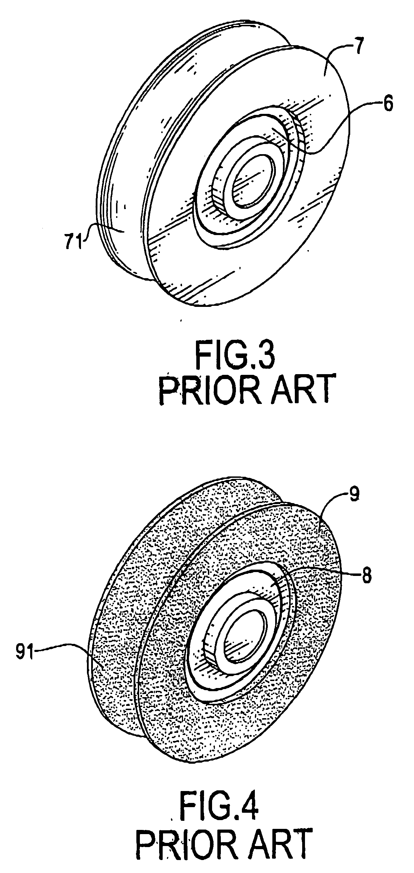

A conventional bearing, as shown in Fig. 3, usually is composed of a rotation member (6), a metal ring (7) enclosing therein the rotation member (6) and having a U-shaped groove (71) defined in an outer periphery, of the metal ring (7) to allow a rope to be reeved therearound. The metal bearing is durable and has high load capability, However, the work for mounting the metal ring onto the rotation member is difficult and thus the fabrication cost of this type of bearing is high.

In order to overcome the disadvantage of the conventional bearing, another bearing is introduced to the market, which comprises a rotation member (8) and a plastic ring (9) mounted outside the rotation member (8) to enclose therein the rotation member (8)and having a U-shaped groove (91) defined in an outer periphery of the plastic ring (9) to allow a rope to be reeved therearound. This semi-plastic product involves only simple work to mount the plastic ring onto the rotation member so that the fabrication cost is low and required manpower is minimal due to automated production. Still, this kind of semi-plastic bearing suffers a different kind of disadvantage. That is, the load capability of this semi-plastic bearing is low in that the plastic ring is easily worn as a result from the friction of the rope in the U-shaped groove. Thus, improvement is required to introduce an improved bearing.

To overcome the shortcomings, the present invention tends to provide an improved bearing to mitigate the aforementioned problems.

The primary objective of the present invention is to provide an improved bearing having a plastic ring mounted outside the rotation member and a metal ring mounted outside the plastic ring such that the work for mounting the plastic ring on the rotation member is simple and the load capability is high due to the providing of the metal ring outside the plastic ring.

Other objects, advantages and novel features of the invention will become more apparent from the following detailed description when taken in conjunction with the accompanying drawings.

### In the drawings:

Fig. 1 is an exploded perspective view of the bearing of the present invention;
Fig. 2 is a cross sectional view of the bearing of the assembled bearing of the present invention;
Fig. 3 is a perspective view of a conventional bearing; and
Fig. 4 is a perspective view of another conventional bearing.

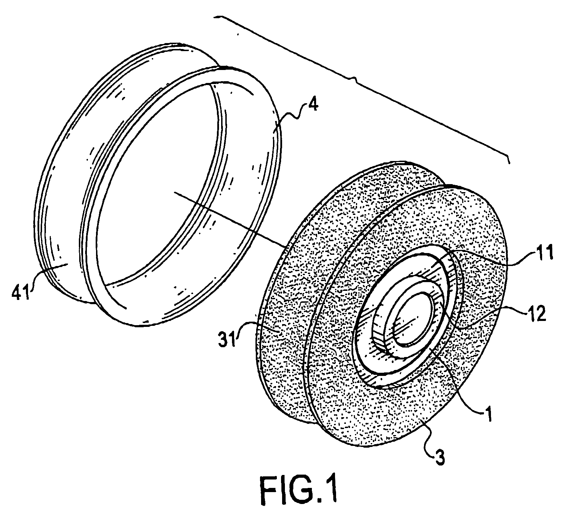

With reference to Fig. 1, the bearing in accordance with the present invention has a rotation element (1) with an outer portion (11) and an inner portion (12) securely and rotatably received inside the outer portion (11), a plastic ring (3) securely mounted on an outer periphery of the outer portion (11) to allow the plastic ring (3) to rotate relative to the inner portion (12), the plastic ring (3) having a U-shaped groove (31) defined in an outer periphery thereof and a metal ring (4) securely mounted on the plastic ring (3) and having a second U-shaped groove (41) corresponding to the U-shaped groove (31) of the plastic ring (3).

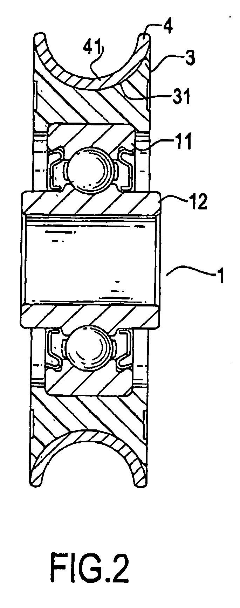

With reference to Fig. 2, when the bearing of the present invention is in assembly, it is noted that the plastic ring (3) is mounted on the rotation element (1) by an automated process such as injection molding. Thereafter, the metal ring (4) is securely mounted on the outer periphery of the plastic ring (3) by an automated process again, such as die casting, with the second U-shaped groove (41) aligned with the U-shaped groove (31) of the plastic ring (3).

After assembly, it is learned that the work involved to mount the plastic ring (3) on the outside the outer portion (12) of the rotation element (1) and the work required to mount the metal ring (4) outside the plastic ring (3) are simple such that the manufacture cost is low. Besides, because the metal has higher durability than that of the plastic, the metal ring mounted outside the plastic ring (3) increases the load capability when compared with the conventional bearing.

It is to be understood, however, that even though numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. A bearing comprising:
a rotation element (1) composed of an outer portion (11) and an inner portion (12) rotatably received inside the outer portion (11);
a plastic ring (3) securely mounted on an outer periphery of the outer portion (11) and having a groove (31) defined in an outer periphery of the plastic ring (3); and
a metal ring (4) securely mounted on the outer periphery of the plastic ring (3) and having a second groove (41) aligned with the groove (31) of the plastic ring (3),
whereby load capability is high due to the addition of the metal ring (4) on the plastic ring (3) and manufacture cost is low because work involved in mounting the plastic ring (3) on the outer portion (11) is easy.
